# EUROPEAN PATENT SPECIFICATION

(11) **EP 1 375 278 B1**
(45) Date of publication and mention of the grant of the patent: **17.02.2010**
(21) Application number: 03013733.5
(22) Date of filing: 17.06.2003
(51) Int. Cl.: B60T 7/12, B60K 31/00

(54) **Automatic braking during vehicle creep control**
Automatische Bremsung während der Kriechbetriebsart eines Fahrzeugs
Procédé de freinage automatique dans la phase de rampage d'un véhicule

(30) Priority: 18.06.2002 JP 2002177663
(43) Date of publication of application: 02.01.2004
(73) Proprietor: Toyota Jidosha Kabushiki Kaisha, Toyota-shi, Aichi-ken, 471-8571 (JP)
(72) Inventor:
(74) Representative: Winter, Brandl, Fürniss, Hübner Röss, Kaiser, Polte Partnerschaft Patent- und Rechtsanwaltskanzlei

(56) References cited:
- EP-A- 0 992 412
- WO-A-96/11826
- DE-A1- 19 753 764
- US-A- 4 969 103
- US-A- 6 006 144
- US-A- 6 018 692

## Description

The invention relates to a running control apparatus for a vehicle which controls a running state of a vehicle while the vehicle is creeping, and a control method of same.

An automatic transmission vehicle (i.e., an AT vehicle) using a torque converter (i.e., a fluid coupling) can run even when an accelerator pedal is not being depressed, since an engine output due to idling can be transmitted to a wheel. This is so-called creeping. Creeping is convenient when roads are congested or when parking since the vehicle can run at a low speed only by letting up on a foot brake when a position of a select lever of an automatic transmission is in a D range or an R range.

When a vehicle speed during creeping is too low, it takes too long to move the vehicle, which impairs usability. On the other hand, when the vehicle speed during creeping is too high, a driver needs to perform a braking operation frequently, which also impairs usability. An automatic steering apparatus using creeping, which is disclosed in Japanese Patent Laid-Open Publication No. 10-297520, prompts the driver to perform a braking operation or the like such that the vehicle speed falls to within a predetermined range (a creep speed suitable for performing automatic parking control).

However, in the case of the apparatus disclosed in the above-mentioned publication, automatic parking is performed within a range of appropriate vehicle speed. However, when creep torque is low, it takes a long time until the vehicle speed reaches the appropriate vehicle speed, or acceleration performance deteriorates, which impairs usability. On the other hand, when the creep torque is high, the acceleration performance is enhanced. However, when the braking operation is delayed even only slightly, the vehicle speed rapidly increases (the vehicle rapidly accelerates) even within the range of appropriate vehicle speed, which also impairs usability. Therefore, a refinement in the vehicle control apparatus has been desired such that the driver can operate the vehicle more easily not only during automatic parking but also during creeping.

EP 0 992 421 A1 discloses a vehicle brake control to control speed and change of acceleration of a vehicle during hill descent. According to this disclosure in case the detected speed of the vehicle during hill descent is too high, brakes are applied so that the change in deceleration is limited, i.e. even if the speed is to high, the deceleration by the brakes is started smoothly so as not to create a strong jerk.

Accordingly, it is an object of the invention to provide a driving control apparatus for a vehicle which allows a driver to operate the vehicle more easily during creeping.

A running control apparatus for a vehicle according to a first aspect of the invention controls a running state of a vehicle during creeping, and includes actual acceleration detecting means for detecting an actual acceleration in a longitudinal direction of the vehicle, upper limit acceleration setting means for setting an upper limit acceleration, which is an upper limit to an acceleration in the longitudinal direction of the vehicle during creeping, and automatic braking means for applying a braking force to the vehicle based on the actual acceleration detected by the actual acceleration detecting means and the upper limit acceleration set by the upper limit acceleration setting means.

According to the running control apparatus for a vehicle, it becomes possible for a driver to operate the vehicle during creeping more easily by performing automatic braking during creeping based on the detected actual acceleration and the set upper limit acceleration. In this case, it is possible to further enhance operability of the vehicle during creeping by setting an automatic braking mode and increasing creep torque in this mode. Also, it is possible to further enhance the operability of the vehicle during creeping by setting an upper limit acceleration according to a vehicle speed.

In some hybrid vehicles and electric vehicles, a motor generates vehicle driving torque which corresponds to the creep torque of an AT vehicle having a torque converter, and creeping is realized using the vehicle driving torque. "Creeping" in the invention includes creeping which is realized by a motor in the hybrid vehicle, the electric vehicle or the like.

Also, the running control apparatus for a vehicle may further include mode setting means for setting an automatic braking mode in which the automatic braking can be realized by the automatic braking means during creeping, and torque increasing means for increasing the creep torque when the automatic control mode is set by the mode setting means such that the creep torque is higher than when the automatic braking mode is not set.

Further, in the running control apparatus for a vehicle, the torque increasing means may increase the creep torque by increasing an idle speed of an internal combustion engine.

Further, in the running control apparatus for a vehicle, the automatic braking means may perform the automatic braking when the actual acceleration is equal to or higher than the upper limit acceleration.

The running control apparatus for a vehicle may include actual vehicle speed detecting means for detecting an actual vehicle speed, and the automatic braking means may perform automatic braking when the actual vehicle speed detected by the actual vehicle speed detecting means is higher than a predetermined vehicle speed and the actual acceleration is equal to or higher than the upper limit acceleration.

Also, in the running control apparatus for a vehicle, the automatic braking means may set a braking force at the time of the automatic braking based on the actual acceleration and the upper limit acceleration.

Further, in the running control apparatus for a vehicle, the automatic braking means may adjust the braking force by adjusting a hydraulic pressure of brake fluid in a brake wheel cylinder.

Further, in the running control apparatus for a vehicle, the upper limit setting means may set the upper limit acceleration according to the vehicle speed.

A running control method for a vehicle according to a second aspect of the invention is a running control method for a vehicle for controlling a running state of a vehicle during creeping. In this method, an actual acceleration in a longitudinal direction of a vehicle is detected, an upper limit to the acceleration in the longitudinal direction of the vehicle during creeping is se, and a braking force is automatically applied to the vehicle based on the detected actual acceleration and the upper limit acceleration.

FIG. 1 is a block diagram showing a first embodiment according to the invention; and

FIG. 2 is a flowchart of automatic braking control for a vehicle according to a second embodiment of the invention.

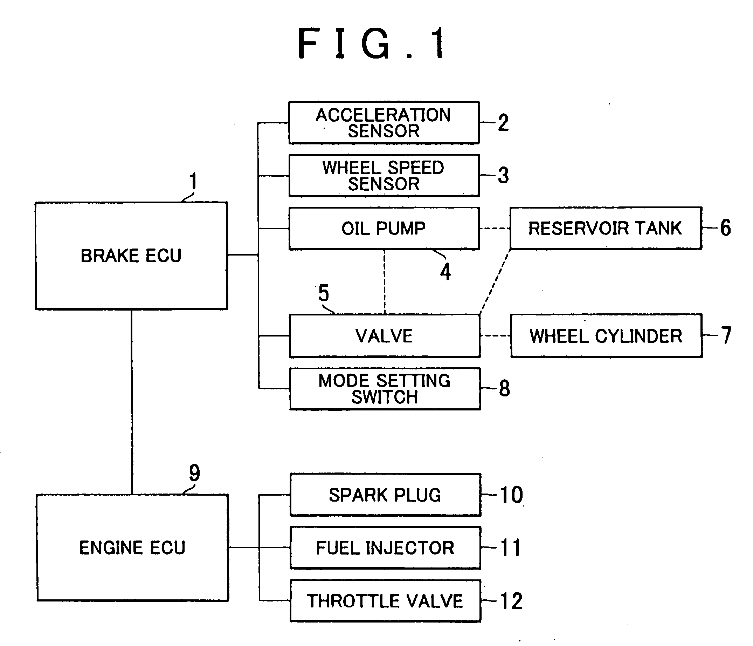

Hereafter, a first embodiment according to the invention will be described. FIG. 1 shows a configuration of a control apparatus for a vehicle according to the invention. An acceleration sensor 2 which detects an acceleration of a vehicle in a longitudinal direction, and a wheel speed sensor 3 which is mounted on each wheel so as to detect a rotational speed of each wheel are connected to a brake ECU 1 for managing overall braking control for the vehicle. An oil pump 4, which supplies brake fluid in a reservoir tank 6 to a wheel cylinder 7 of each wheel through a valve 5, is also connected to the brake ECU 1. The valve 5 is also connected to the brake ECU 1, and the opening and closing thereof is duty-controlled by the ECU 1.

The valve 5 increases a hydraulic pressure in the wheel cylinder 7 by supplying the brake fluid from the oil pump 4 to the wheel cylinder 7 thereby enabling the braking of each wheel. Also, the valve 5 decreases the hydraulic pressure in the wheel cylinder 7 by allowing the oil in the wheel cylinder 7 to flow back to the reservoir tank 6. This hydraulic brake mechanism is also used for ABS control or brake assist control. Further, in the embodiment, a mode setting switch 8 is connected to the brake ECU 1. The mode setting switch 8 is for selectively switching an automatic braking mode ON and OFF, and is provided at a position which the driver can reach so as to operate this mode setting switch 8. When the automatic braking mode is ON, automatic braking can be performed during creeping.

The brake ECU 1 manages not only braking control during creeping, to be described later, but also ABS control and brake assist control. Also, the brake ECU 1 manages vehicle performance stabilization control together with other ECUs (i.e., an engine ECU 9 and the like, to be described later). The engine ECU 9, which is connected to the brake ECU 1, manages overall control of the engine. A spark plug 10 which ignites an air-fuel mixture in a cylinder, a fuel injector 11 which injects fuel into an intake port or the cylinder, and a throttle valve 12 which adjusts an intake air amount and the like are connected to the engine ECU 9. The throttle valve 12 according to the embodiment is an electronically controlled throttle valve, and opening thereof is controlled by the engine ECU 9.

Also, the brake ECU 1 and the engine ECU 9 are electronic control units each of which is formed of a CPU for performing computation, ROM, RAM that are storage portions, and the like.

Next, running control during creeping by the running control apparatus having the above-mentioned configuration will be described. It is an object of the creeping running control of the invention to make it possible to move the vehicle quickly while preventing rapid acceleration during performing creeping while running at a low speed when roads are congested or when parking, for example. It is another object of the running control to keep the driver operating the vehicle while performing creeping running control. For example, if the vehicle completely manages the vehicle speed and steering, it is possible that the driver may not pay attention to the operation. In this case, however, by setting an upper limit to the acceleration of the vehicle, the operation is reliably performed by making creeping safe and easy while intentionally leaving some of the vehicle operation to the driver.

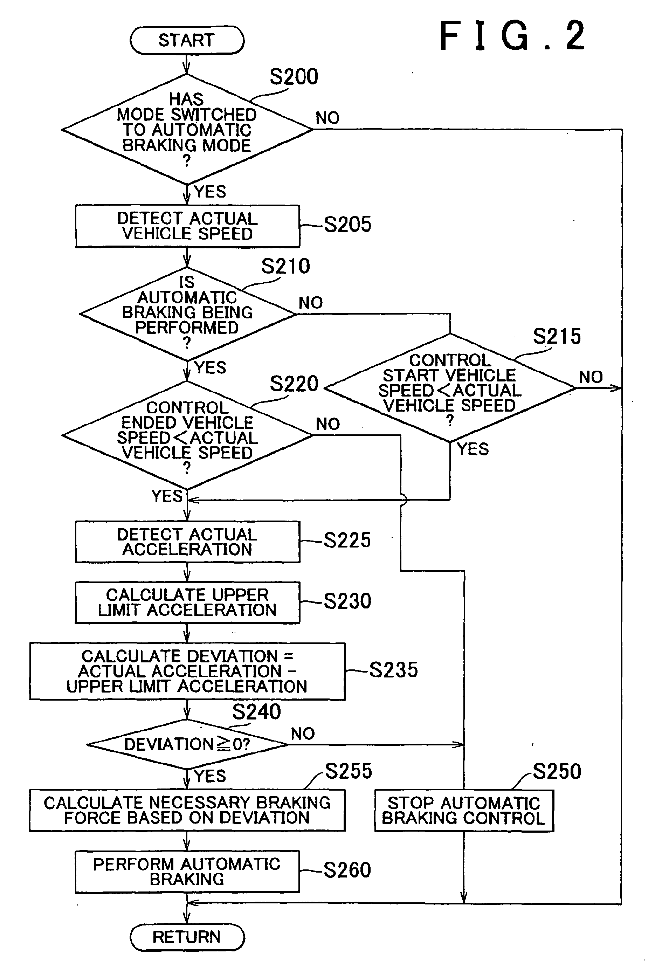

FIG. 2 is a flowchart of running control by the running control apparatus according to the invention. The control shown in the flowchart in FIG. 2 is repeatedly performed at predetermined intervals of time. First, the mode setting switch 8 is turned ON by the driver (i.e., an occupant) and it is determined whether the mode has been switched to an automatic braking mode (step S200). When the running control apparatus is in the automatic braking mode, it is possible to perform automatic braking during creeping. However, when the running control apparatus is not in the automatic braking mode, the automatic braking during creeping is not performed, and regular creeping is performed.

When the mode setting switch has been turned ON and the running control apparatus is in the automatic braking mode, creep torque is set to be higher than when the running control apparatus is not in the automatic braking mode. When the running control apparatus is in the automatic braking mode, automatic braking, to be described later, is performed. Therefore, it is possible to realize good acceleration performance of a vehicle while suppressing rapid acceleration by increasing the creep torque in the automatic braking mode.

In order to increase the creep torque, an idle speed needs to be increased by the engine ECU 9. The idle speed can be increased by increasing the intake air amount during idling using the throttle valve 12. The creep torque can also be increased by controlling the spark timing of the spark plug 10 or by controlling the injection amount of the fuel injected from the fuel injector 11. These methods may be employed in combination. When a negative determination is made in step S200, automatic control during creeping is not performed, and the process in the flowchart in FIG. 2 immediately ends. Then, the regular creep running is performed.

On the other hands, when an affirmative determination is made in step S200, the actual vehicle speed is detected (step S205). The actual vehicle speed is detected by performing a computation with the brake ECU 1 based on an output pulse from the wheel speed sensor 3. Next, it is determined whether the automatic raking during creeping is already being performed (during braking) (step S210). When the automatic braking is not being performed even though the automatic control mode has been set, that is, when a negative determination is made in step S210, it is determined whether the actual vehicle speed detected in step S205 is higher than a preset vehicle speed at which the control starts (hereinafter, referred to as a "control start vehicle speed") (step S215).

When a negative determination is made in step S215, that it, when the actual vehicle speed is equal to or lower than the control start vehicle speed, it is determined that it is not necessary to start the automatic braking control since the vehicle speed is sufficiently low, so the process in flowchart in FIG. 2 immediately ends. On the other hand, when an affirmative determination is made in step S215, that is, when the actual vehicle speed is higher than the control start vehicle speed, the automatic braking control is started, and the actual acceleration in the longitudinal direction of the vehicle is detected to determine whether to perform the automatic braking (step S225). The start of the automatic braking control does not signify the actual start of the automatic braking. After the start of the automatic braking control, it is determined whether to perform the automatic braking (refer to steps 225 to 255, to be described later). Then, when an affirmative determination is made, the actual automatic braking is performed.

On the other hand, when an affirmative determination is made in step S210, that is, when the automatic braking during creeping is already being performed (during braking), it is determined whether the actual vehicle speed detected in step S205 is higher than a preset vehicle speed at which control ends (hereinafter, referred to as a "control ended vehicle speed") (step S220). When a negative determination is made in step S220, that is, when the actual vehicle speed is equal to or lower than the control ended vehicle speed, it is determined that it is unnecessary to continue the automatic braking since the vehicle speed is sufficiently low, so the automatic braking control is stopped (step S250). At this time, the actual automatic braking and the automatic braking control end simultaneously. After performing step S250, the process in the flowchart in FIG. 2 immediately ends. On the other hand, when an affirmative determination is made in step S220, that is, when the actual vehicle speed is higher than the control ended vehicle speed, the actual acceleration in the longitudinal direction of the vehicle is newly detected so as to continue the automatic braking (step S225).

The control ended vehicle speed must be lower than the control start vehicle speed. Hunting, in which the control starts and ends repeatedly, can be prevented by providing hysteresis to the control start vehicle speed and the control ended vehicle speed. After an affirmative determination is made in step S215 or S220, and the actual acceleration is detected in step S225, the upper limit acceleration is calculated (step S230). When the actual acceleration in the longitudinal direction of the vehicle during creeping, is equal to or higher than this upper limit acceleration, the automatic braking is performed. In the embodiment, the upper limit acceleration is set according to the vehicle speed. In the case where the vehicle is running at an extremely low speed, even if a relatively low deceleration (i.e., a negative acceleration) is applied, the driver feels a strong sense of deceleration and difficulty in operation. However, when the speed is increased to some extent, the sense of deceleration is reduced even at the same deceleration (i.e., the negative acceleration), and the difficulty in operation felt by the driver is reduced. Namely, setting the upper limit acceleration according to the vehicle speed allows the driver to operate the vehicle more easily.

After performing step S230, the deviation (i.e., actual acceleration upper limit acceleration) is calculated (step S235). Further, it is determined whether the calculated deviation is equal to or larger than zero (step S240). When the deviation is smaller than zero, the ongoing automatic braking control (simultaneously with the actual automatic braking) ends (step S250) since the actual acceleration has not reached the upper limit acceleration, and the process in the flowchart in FIG. 2 immediately ends. On the other hand, when the deviation is equal to or larger than zero, a necessary braking force is calculated based on the deviation so as to actually perform the automatic braking (step S255) since the actual acceleration is equal to or higher than the upper limit acceleration, and the automatic braking is performed so as to obtain the calculated necessary braking force (step S260).

In this case, the necessary braking force is calculated based on the deviation. This "necessary braking force" may be a braking force for making the deviation zero, or may be a braking force for making the deviation negative. In the embodiment, the braking force is determined based on the deviation. However, a predetermined braking force can be generated that is not based on the deviation. For example, when the actual acceleration has exceeded the upper limit acceleration, it is possible to perform control in which a predetermined braking force is generated according to the vehicle speed at that time, and the braking force is increased at a predetermined rate until the acceleration becomes negative (i.e., deceleration).

In steps 255 and 260, the braking force is adjusted by controlling the hydraulic pressure which is generated by the oil pump 4, and the opening and closing duty ratio of the valve 5, and the like. It is thus possible to make the operation of the vehicle during creeping easier by performing the automatic braking during creeping based on the detected actual acceleration and the set upper limit acceleration. More particularly, it is possible to prevent the increase in the vehicle speed from slowing while preventing rapid acceleration and the like. Also, some of the vehicle operation is still left to the driver, a situation in which the driver does not pay attention to the vehicle operation can be avoided.

Note that the invention is not limited to the above-mentioned embodiment. For example, when the vehicle is a hybrid vehicle or the like, an electric motor which regenerates power may be employed as automatic braking means for applying a braking force to the vehicle. Also, in the embodiment, the running control apparatus, which performs automatic braking based on the actual acceleration and the set upper limit acceleration during creeping, is provided with both the mode setting means and the torque increasing means, and also sets the upper limit acceleration according to the vehicle speed. However, the running control apparatus does not need to be provided with both the mode setting means and the torque increasing means, and set the upper limit acceleration according to the vehicle speed. It is sufficient that only one of the mode setting means and the torque increasing means be provided, and upper limit acceleration be set according to the vehicle speed.

Also, in the embodiment, the upper limit acceleration is set according to a vehicle speed. However, the upper limit acceleration setting means may set a predetermined upper limit acceleration regardless of the vehicle speed. Further, as mentioned above, "creeping" in the invention includes creeping which is realized by a motor in a hybrid vehicle, an electric vehicle or the like. In this case, the torque increasing means is for increasing torque generated by the motor. More particularly, the torque increasing means is realized by a mechanism (an ECU, an inverter or the like) for increasing the power supplied to the motor.

## Claims

1. A running control apparatus for a vehicle which controls a running state of a vehicle during creeping, including actual acceleration detecting means (S225) for detecting an actual acceleration in a longitudinal direction of the vehicle comprising:
upper limit acceleration setting means (S230) for setting an upper limit acceleration, which is an upper limit to the acceleration in the longitudinal direction of the vehicle during creeping;
automatic braking means (S260) for automatically applying a braking force to the vehicle based on the actual acceleration detected by the actual acceleration detecting means (S225) and the upper limit acceleration set by the upper limit acceleration setting means (S230),
mode setting means (8) for setting an automatic braking mode in which automatic braking can be realized by the automatic braking means during creeping; and **characterized by** further comprising
torque increasing means (9) for increasing creep torque when the automatic braking mode is set by the mode setting means (8) such that a creep torque is higher than when the automatic braking mode is not set.

2. The running control apparatus for a vehicle according to claim 1, **characterized in that** the torque increasing means (9) increases the creep torque by increasing an idle speed of an internal combustion engine.

3. The running control apparatus for a vehicle according to any one of claims 1 or 2 **characterized in that** the automatic braking means (S260) performs automatic braking when the actual acceleration is equal to or higher than the upper limit acceleration (S240).

4. The running control apparatus for a vehicle according to any one of claims 1 or 2, **characterized in that** actual vehicle speed detecting means (3) for detecting an actual vehicle speed is provided, and the automatic braking means (S260) performs automatic braking when the actual vehicle speed detected by the actual vehicle speed detecting means (S250) is higher than a predetermined vehicle speed (S220, S215) and the actual acceleration is equal to or higher than the upper limit acceleration (S240).

5. The running control apparatus for a vehicle according to any one of claims 1 to 4, **characterized in that** the automatic braking means (S260) sets a braking force at the time of automatic braking based on the actual acceleration and the upper limit acceleration (S255).

6. The running control apparatus for a vehicle according to any one of claims 1 to 5, **characterized in that** the automatic braking means (S260) adjusts a braking force by adjusting a hydraulic pressure of brake fluid in a brake wheel cylinder (7).

7. The running control apparatus for a vehicle according to any one of claims 1 to 6, **characterized in that** the upper limit acceleration setting means (S230) sets the upper limit, acceleration according to the actual vehicle speed.

8. A running control method for a vehicle for controlling a running state of a vehicle during creeping, **characterized by** comprising the steps of:
detecting an actual acceleration in a longitudinal direction of the vehicle (S225);
setting an upper limit to the acceleration in a longitudinal direction of the vehicle during creeping (S230); and
automatically applying a braking force to the vehicle based on the detected actual acceleration and the upper limit acceleration (S260),
setting an automatic braking mode in which automatic braking can be realized by the automatic braking means during creeping ; **characterized by** increasing creep torque when the automatic braking mode is set such that a creep torque is higher than when the automatic braking mode is not set.

9. The running control apparatus for a vehicle according to claim 3, **characterized in that** the upper limit acceleration setting means sets the upper limit acceleration to prevent the vehicle from rapidly accelerating only when the torque increasing means increases the creep torque during the automatic braking mode.

## Patentansprüche

1. Eine Fahrsteuervorrichtung für ein Fahrzeug, die einen Fahrzustand eines Fahrzeugs während eines Kriechens steuert, die eine Einrichtung zur Erfassung der tatsächlichen Beschleunigung (S225) aufweist, um eine tatsächlichen Beschleunigung in einer Längsrichtung des Fahrzeugs zu erfassen, wobei die Vorrichtung Folgendes aufweist:
eine Einrichtung (S230) zum Festlegen eines oberen Grenzbeschleunigung, um eine obere Grenzbeschleunigung festzulegen, die ein oberer Grenzwert der Beschleunigung in der Längsrichtung des Fahrzeugs während des Kriechens ist;
eine automatische Bremseinrichtung (S260), um automatisch eine Bremskraft auf das Fahrzeug auf der Grundlage der tatsächlichen Beschleunigung, die von der Einrichtung (S225) zur Erfassung der tatsächlichen Beschleunigung erfasst wird, und der oberen Grenzbeschleunigung anzuwenden, die durch die Einrichtung zum Festlegen der oberen Grenzbeschleunigung (S230) festgelegt ist,
eine Modusfestlegungseinrichtung (8), um einen automatischen Bremsmodus festzulegen, in welchem ein automatisches Bremsen durch die automatische Bremseinrichtung während des Kriechens realisiert werden kann; und **dadurch gekennzeichnet, dass** sie weiterhin
eine Drehmomenterhöhungseinrichtung (9) aufweist, um, wenn der automatische Bremsmodus von der Einrichtung (8) zur Modusfestlegung eingestellt ist, ein Kriechdrehmoment so zu erhöhen, dass ein Kriechdrehmoment höher ist, als wenn der automatische Bremsmodus nicht eingestellt ist.

2. Fahrsteuervorrichtung für ein Fahrzeug nach Anspruch 1, **dadurch gekennzeichnet, dass** die Drehmomenterhöhungseinrichtung (9) das Kriechdrehmoment durch Erhöhen einer Leerlaufdrehzahl einer Brennkraftmaschine erhöht.

3. Fahrsteuervorrichtung für ein Fahrzeug nach einem der Ansprüche 1 oder 2, **dadurch gekennzeichnet, dass** die automatische Bremseinrichtung (S260) ein automatisches Bremsen durchführt, wenn die tatsächliche Beschleunigung gleich der oder größer als die obere Grenzbeschleunigung (S240) ist.

4. Fahrsteuervorrichtung für ein Fahrzeug nach einem der Ansprüche 1 oder 2, **dadurch gekennzeichnet, dass** sie eine Einrichtung (3) zur Erfassung einer tatsächlichen Fahrzeuggeschwindigkeit aufweist, um eine tatsächliche Fahrzeuggeschwindigkeit zu erfassen, und die automatische Bremseinrichtung (S260) ein automatisches Bremsen durchführt, wenn die tatsächliche Fahrzeuggeschwindigkeit, die von der Einrichtung (S250) zur Erfassung der tatsächlichen Fahrzeuggeschwindigkeit erfasst wird, größer als eine vorab festgelegte Fahrzeuggeschwindigkeit (S220, S215) ist, und die tatsächliche Beschleunigung gleich der oder größer als die obere Grenzbeschleunigung (S240) ist.

5. Fahrsteuervorrichtung für ein Fahrzeug nach einem der Ansprüche 1 bis 4, **dadurch gekennzeichnet, dass** die automatische Bremseinrichtung (S260) eine Bremskraft zur Zeit des automatischen Bremsens auf der Grundlage der tatsächlichen Beschleunigung und der oberen Grenzbeschleunigung (S255) festlegt.

6. Fahrsteuervorrichtung für ein Fahrzeug nach einem der Ansprüche 1 bis 5, **dadurch gekennzeichnet, dass** die automatische Bremseinrichtung (S260) eine Bremskraft durch Anpassen eines Hydraulikdrucks von Bremsfluid in einem Radbremszylinder (7) anpasst.

7. Fahrsteuervorrichtung für ein Fahrzeug nach einem der Ansprüche 1 bis 6, **dadurch gekennzeichnet, dass** die Einrichtung (S230) zur Festlegung der oberen Grenzbeschleunigung die obere Grenzbeschleunigung in Übereinstimmung mit der tatsächlichen Fahrzeuggeschwindigkeit festlegt.

8. Fahrsteuerverfahren für ein Fahrzeug, um einen Fahrzustand eines Fahrzeugs während des Kriechens zu steuern, **dadurch gekennzeichnet, dass** es weiterhin die folgenden Schritte aufweist:
Erfassen einer tatsächlichen Beschleunigung in einer Längsrichtung des Fahrzeugs (S225);
Festlegen eines oberen Grenzwerts für die Beschleunigung in einer Längsrichtung des Fahrzeugs während des Kriechens (S230); und
automatisches Anwenden einer Bremskraft auf das Fahrzeug auf der Grundlage der erfassten tatsächlichen Beschleunigung und des oberen Grenzwerts der Beschleunigung (S260),
Festlegen eines automatischen Bremsmodus, in welchem eine automatische Bremsung durch die automatische Bremseinrichtung während des Kriechens realisiert werden kann, **gekennzeichnet durch**
Erhöhen des Kriechdrehmoments, wenn der automatische Bremsmodus festgelegt ist, so dass ein Kriechdrehmoment höher ist, als wenn der automatische Bremsmodus nicht festgelegt ist.

9. Fahrsteuervorrichtung für ein Fahrzeug nach Anspruch 3, **dadurch gekennzeichnet, dass** die Einrichtung zur Festlegung der oberen Grenzbeschleunigung die obere Grenzbeschleunigung, um eine schnelle Beschleunigung des Fahrzeugs zu verhindern, nur dann festlegt, wenn die Drehmomenterhöhungseinrichtung das Kriechdrehmoment während des automatischen Bremsmodus erhöht.

## Revendications

1. Appareil de contrôle de fonctionnement pour un véhicule qui contrôle un état de fonctionnement d'un véhicule pendant le rampage, comprenant un moyen de détection d'accélération réelle (S225) pour détecter une accélération réelle dans une direction longitudinale du véhicule comportant :
un moyen de détermination d'accélération limite supérieure (S230) pour déterminer une accélération limite supérieure, qui est une limite supérieure de l'accélération dans la direction longitudinale du véhicule pendant le rampage ;
un moyen de freinage automatique (S260) pour appliquer automatiquement une force de freinage au véhicule en fonction de l'accélération réelle détectée par le moyen de détection d'accélération réelle (S225) et de l'accélération limite supérieure déterminée par le moyen de détermination d'accélération limite supérieure (S230),
un moyen de détermination de mode (8) pour déterminer un mode de freinage automatique pendant lequel un freinage automatique peut être réalisé par le moyen de freinage automatique pendant le rampage ; et
**caractérisé en ce qu'**il comporte en outre
un moyen d'accroissement de couple (9) pour augmenter le couple de rampage lorsque le mode de freinage automatique est déterminé par le moyen de détermination de mode (8) de sorte qu'un couple de rampage est supérieur lorsque le mode de freinage automatique n'est pas déterminé.

2. Appareil de contrôle de fonctionnement pour un véhicule selon la revendication 1, **caractérisé en ce que** le moyen d'accroissement de couple (9) accroît le couple de rampage en augmentant une vitesse de ralenti d'un moteur à combustion interne.

3. Appareil de contrôle de fonctionnement pour un véhicule selon l'une quelconque des revendications 1 ou 2, **caractérisé en ce que** le moyen de freinage automatique (S260) effectue un freinage automatique lorsque l'accélération réelle est égale à ou supérieure à l'accélération limite supérieure (S240).

4. Appareil de contrôle de fonctionnement pour un véhicule selon l'une quelconque des revendications 1 ou 2, **caractérisé en ce qu'**un moyen de détection de vitesse réelle de véhicule (3) pour détecter une vitesse réelle de véhicule est prévu, et le moyen de freinage automatique (S260) effectue un freinage automatique lorsque la vitesse réelle de véhicule détectée par le moyen de détection de vitesse réelle de véhicule (S250) est supérieure à une vitesse de véhicule prédéterminée (S220, S215) et l'accélération réelle est égale à ou supérieure à l'accélération limite supérieure (S240).

5. Appareil de contrôle de fonctionnement pour un véhicule selon l'une quelconque des revendications 1 à 4, **caractérisé en ce que** le moyen de freinage automatique (S260) détermine une force de freinage au moment du freinage automatique en fonction de l'accélération réelle et de l'accélération limite supérieure (S255).

6. Appareil de contrôle de fonctionnement pour un véhicule selon l'une quelconque des revendications 1 à 5, **caractérisé en ce que** le moyen de freinage automatique (S260) règle une force de freinage en réglant une pression hydraulique du liquide de frein dans un cylindre de roue de frein (7).

7. Appareil de contrôle de fonctionnement pour un véhicule selon l'une quelconque des revendications 1 à 6, **caractérisé en ce que** le moyen de détermination d'accélération limite supérieure (S230) détermine l'accélération limite supérieure selon la vitesse réelle de véhicule.

8. Procédé de contrôle de fonctionnement pour un véhicule afin de contrôler un état de fonctionnement d'un véhicule pendant le rampage, **caractérisé en ce qu'**il comporte les étapes consistant à :
détecter une accélération réelle dans une direction longitudinale du véhicule (S225) ;
déterminer une limite supérieure à l'accélération dans une direction longitudinale du véhicule pendant le rampage (S230) ; et
appliquer automatiquement une force de freinage au véhicule en fonction de l'accélération réelle détectée et de l'accélération limite supérieure (S260),
déterminer un mode de freinage automatique dans lequel un freinage automatique peut être réalisé par le moyen de freinage automatique pendant le rampage ;
**caractérisé par**
l'accroissement du couple de rampage lorsque le mode de freinage automatique est déterminé de sorte qu'un couple de rampage est supérieur lorsque le mode de freinage automatique n'est pas déterminé.

9. Appareil de contrôle de fonctionnement pour un véhicule selon la revendication 3, **caractérisé en ce que** le moyen de détermination d'accélération limite supérieure détermine l'accélération limite supérieure pour éviter que le véhicule n'accélère rapidement uniquement lorsque le moyen d'accroissement de couple augmente le couple de rampage pendant le mode de freinage automatique.
